# EUROPÄISCHE PATENTANMELDUNG

(11) **EP 0 716 892 A1**
(43) Veröffentlichungstag der Anmeldung: **19.06.1996**
(21) Anmeldenummer: 94890212.7
(22) Anmeldetag: 14.12.1994
(51) Int. Cl.: B09B 3/00, C02F 11/00, A62D 3/00, C05F 7/00, C05F 9/00, C04B 11/26, C04B 7/24

(54) **Verfahren zur Aufbereitung von Abfallstoffen**

(71) Anmelder: ÖKOZENT Gesellschaft für Ökologieberatung Gesellschaft m.b.H., A-1060 Wien (AT)
(72) Erfinder: Hillinger, Bruno Dr.Dipl.Ing., A-1060 Wien (AT); Stierschneider, Franz Dr., A-1060 Wien (AT)
(74) Vertreter: Pfeifer, Otto, Dipl.-Ing.

(57) **Zusammenfassung**

Die Erfindung betrifft ein Verfahren zur Aufbereitung von Abfallstoffen, wie Schlämmen und Stäuben, welche Schwermetalle, pathogene Keime und/oder weitere Schadstoffe sowie organische Bestandteile enthalten, worin die Abfallstoffe mit einer konzentrierten Mineralsäure bis zum Erreichen eines pH-Wertes von Null versetzt und anschließend mechanisch in eine feste und eine flüssige Phase getrennt werden, die flüssige Phase durch Zugabe von Kalk auf einen pH-Wert von etwa 7 eingestellt wird und die dabei ausfallenden Feststoffe mechanisch abgetrennt und wahlweise einer Deponierung oder einer weiteren Aufarbeitung zugeführt werden, die verbleibende flüssige Phase osmotisch in Reinwasser und in verschiedene Inhaltsstoffe enthaltendes Restwasser getrennt wird, welches Restwasser der festen Phase aus der ersten mechanischen Trennung zugeführt wird und die entstandene Aufschlämmung gegebenenfalls weiterbehandelt wird.

## Beschreibung

Die Erfindung bezieht sich auf ein Verfahren zur Aufbreitung von Abfallstoffen, wie Schlämmen und Stäuben, welche Schwermetalle, pathogene Keime und/oder weitere Schadstoffe sowie organische Bestandteile enthalten.

Schlämme, das sind Feststoff-Flüssiggemenge, stellen heute ein großes Problem bei der Entsorgung dar. Ein spezieller Problemkreis sind die Klärschlämme aus der Reinigung der Abwässer von Haushalt, Gewerbe und Industrie. Diese enthalten neben organischen Problemstoffen verschiedene Schwermetalle, wie Cadmium, Chrom, Blei, Nickel, Zink, Kupfer, u.a. in unterschiedlicher Bindungsform. Diese Schwermetalle sind zum Teil mobil und können aus dem Schlamm eluiert werden. So gelangen diese ins Grundwasser und in die Nahrungskette und gefährden Mensch und Tier. Außerdem ist Klärschlamm stark sauerstoffzehrend und kann Krankheitserreger enthalten.

Klärschlamm aus der Haushaltsabwasseraufbereitung weist auch eine Reihe von wertgebenden Komponenten auf. Zu diesen zählen viele Arten von organischen Substanzen als Produkte des biologischen Abbau- und Umbauprozesses in der Kläranlage, mineralische Pflanzennährstoffe und Spurenelemente, welche den Klärschlamm befähigen, als Bodenverbesserungs- und Düngemittel zu dienen.

Ohne Verminderung der Schwermetalle auf einen Wert, der für Mensch und Tier unbedenklich ist, darf Klärschlamm nicht mehr auf Agrarflächen ausgebracht und muß daher deponiert werden. Dies wiederum belastet die immer weniger werdende Deponiekapazität. So fallen beispielsweise in der BRD ungefähr 12 Mio t/Jahr, in Österreich ungefähr 2 Mio t/Jahr an Klärschlamm mit 30% Feststoff an, welcher einer Deponierung zugeführt werden muß.

Der Weg der Schwermetalle über den Ackerboden in die Pflanze bzw. in das Grundwasser und dann direkt oder über Tierprodukte in den Menschen ist heute hinlänglich bekannt. Hiefür gibt es auch eine Reihung für die Toxizität der einzelnen Schwermetalle. Der Einfluß von Bodenfaktoren bzw. -zuständen ist für den Schwermetall-Transfer ebenfalls wesentlich. Die zunehmende Bodenversauerung hat einen starken Einfluß auf die ansteigende Löslichkeit der Schwermetalle und erhöht daher die Transferrate (Pflanzenverfügbarkeit und Eluierbarkeit). Auch der abnehmende Humusgehalt von Ackerböden ist für höhere Schwermetalleinträge in die Pflanzen verantwortlich.

Weiters sind in den meisten Klärschlämmen bestimmte Mengen an Dioxinen enthalten (polychlorierte Dibenzodioxine (PCDD) und polychlorierte Dibenzofurane (PCDF)).

Ein weiteres Problem bei den Klärschlämmen stellt ein Gehalt an pathogenen Keimen (Salmonellen) und Rückständen von Pharmazeutika dar.

Für die Extraktion von Schwermetallen aus Klärschlämmen kann als Stand der Technik folgendes ausgeführt werden:
- Die Separation mittels Ionentauscher ist bis jetzt nicht zufriedenstellend gelöst.
- Die biologische Anreicherung von Schwermetallen, z.B. in Pilzen (System Preussag) ist grundsätzlich möglich, aber zur Zeit noch sehr teuer und in der praktischen Anwendung, mit Ausnahme von Gold, unwirtschaftlich.

Einen anderen Teil von umweltrelevanten Abfallstoffen stellen die schwermetallhältigen Stäube dar, welche beispielsweise in Form von Filterstäuben oder Flugsachen ansfallen. Diese Stäube könnten beispielsweise als Ausgangmaterialien für Bindemittel dienen, sie müssen jedoch auf Grund ihres Schwermetallgehaltes als Sondermüll behandelt und deponiert werden.

So gibt es beispielsweise im Tiefbau sehr häufig Situationen, wo ein Bindemittel gesucht wird, bei dem es nicht auf die Erzielung von Festigkeiten in der Größenordnung von Beton ankommt, sondern das Hauptaugenmerk auf einer kurzfristigen Dichtheit liegt, z.B. im Kanalbau. Unter Kurzfristigkeit sind dabei Zeitspannen bis herunter zu z.B. 14 Tagen zu verstehen und es ist offensichtlich, daß Massen auf Zementbasis hiezu nicht in Frage kommen können.

Es wurde nunmehr gefunden, daß sich Gemische aus Gipsbildnern und Puzzolanen hervorragend als Basis für Bodenverfüllmassen bis herunter zur Kurzfristigkeit steuerbarer temporärer Abdichtwirkung eignen.

Bevorzugt sind dabei Mischungen aus festen Reststoffen aus der Entstaubung und Entschwefelung von Rauchgasen aus Verbrennungsprozessen, die großindustrielle Abfallprodukte aus Kohlekraftwerken darstellen und in der Technik als REA-Produkte bezeichnet werden. Ein typisches derartiges REA-Produkt besteht aus 20 Masse-% Flugasche (als Puzzolan), 65 Masse-% Kalziumsulfithalbhydrat und 5 Masse-% Kalziumsulfathalbhydrat (als Gipsbildner) sowie 5 Masse-% Kalziumkarbonat und 5 Masse-% Kalk.

Der Einsatz als Material für Bodenfüllmassen temporärer und steuerbarer Festigkeit und damit steuerbarer Dichtheitsdauer kann sehr einfach durch Einstellen des Wasser-Feststoffverhältnisses erreicht werden, wobei des Wasser-Feststoffverhältnis in der Füllmasse im Bereich von 0,5 bis 2,5 gewählt wird und umsomehr Wasser eingesetzt wird, je kürzer die Standzeit sein soll.

Weiters wurde gefunden, daß bei Bodenverfüllungen mit derartigen Mischungen im Anschluß an die Abdichtperiode annähernd gleiche Bodenporosität wie vor der Verfüllung rückgebildet wird, was sich beim Einsatz von Füllmassen auf Zementbasis nicht erreichen läßt.

Verschiedene Flugaschen, vor allem solche aus Müllverbrennungsanlagen, weisen nun erhebliche Schadstoffinhalte, wie Schwermetalle und Dioxine, auf und können in dieser Form nur auf Sondermülldeponien gebracht werden. Durch den Zerfall des Dichtungsmittels werden nämlich die Schwermetalle und Dioxine wieder freigesetzt und dringen ins Grundwasser ein.

Aus der Technik sind verschiedenste Verfahren zur Aufbereitung von kontaminierten Stoffen bekannt. So ist beispielsweise in der US-PS 4,261,883 ein Verfahren zur Vorbehandlung von salzhältigem Gebrauchswasser beschrieben, welches einer reversen Osmose unterworfen werden soll. Bei dieser Vorbehandlung wird das Gebrauchswasser, bei welchem es sich unter anderem auch um Abwasser handeln kann, mit einem Salz und einer Säure versetzt, welche beide die gleichen Anionen aufweisen. Im konkret beschriebenen Fall handelt es sich dabei um FeCl₃ und HCl. Dies hat zur Folge, daß der pH-Wert des Gebrauchswassers auf den für die Osmoseeinheit erforderlichen Wert abgesenkt wird. Durch das dabei als Hydroxid ausfallende Eisen werden darüberhinaus die im Gebrauchwasser vorhandenen Feststoffe auch adsorptiv gebunden. Vor der Zufuhr zur Osmoseeinheit wird der die Hydroxide enthaltende Anteil durch Abzentrifugieren von dem Rest des Gebrauchswassers getrennt, welches gegebenenfalls nach einer weiteren Behandlung mit einem Reduktionsmittel der Osmoseeinheit zugeführt wird. Der die Hydroxide enthältende Anteil wird durch weitere Zugäbe von Salzsäure und FeCl₃ behandelt, abermals einer Trennung unterworfen und in das Verfahren zurückgeführt bzw. in einen Vorfluter entlassen.

In der CH-PS 650 231 wird ein Verfahren zur Behandlung von radioaktiv kontaminierten Abwässern beschrieben, die Tenside, Fette und Öle enthalten. Diese Abwässer werden zunächst mit einer Mineralsäure, wie Schwefelsäure, auf einen pH-Wert von 2,5 bis 3 gebracht und anschließend gleichzeitig mit fein verteilter Aktivkohle, KMnO₄, MnSO₄ und CaCO₃ versetzt. Säureempfindliche Tenside, Öle und Fette können durch die Ansäuerung gespalten, durch den anschließenden Zusatz von Erdalkalimetallsalzen gefällt oder durch Kaliumpermanganat oxidiert und so in schwer- bis nicht lösliche Materialien übergeführt werden, welche nach Zusatz von feinverteilter Aktivkohle adsorptiv entfernt werden. Nach einer bestimmten Vermischungsdauer wird der pH-Wert des Gemisches mit beispielsweise Ammoniak auf einen Wert von 8,5 bis 9 angehoben. Der sich auf dem Boden absetzende Schlamm wird vom überstehenden Wasser abgetrennt und einer Abfallbeseitigung zugeführt. Das Wasser wird über einen Verdampfer in den Wasserkreislauf der Anlage rückgeführt.

Ziel beider bekannter Verfahren ist es, die Verunreinigungen möglichst vollständig abzutrennen, um so den Reinstoff (Wasser) zu erhalten.

Ziel der vorliegenden Erfindung ist jedoch ein Verfahren zur Aufbereitung von Abfallstoffen wie Schlämmen und Stäuben, wodurch die in diesen Abfallstoffen enthaltenen Schwermetalle und andere Schadstoffe so weit reduziert werden, daß beispielsweise so aufbereiteter Klärschlamm problemlos als organischer Dünger und Humusbildner eingesetzt werden kann und so aufbereitete Flugasche als Ausgangmaterial für Bindemittel oder selbst als Bindemittel dienen kann.

Das erfindungsgemäße Verfahren besteht daher darin, daß die Abfallstoffe mit einer konzentrierten Mineralsaure bis zum Erreichen eines pH-Wertes von Null versetzt und anschließend mechanisch in eine feste und eine flüssige Phase getrennt werden, die flüssige Phase durch Zugabe von Kalk auf einen pH-Wert vor etwa 7 eingestellt wird und die dabei ausfallenden Feststoffe mechanisch abgetrennt und wahlweise einer Deponierung oder einer weiteren Aufarbeitung zugeführt werden, die verbleibende flüssige Phase osmotisch in Reinwasser und in verschiedene Inhaltsstoffe enthaltendes Restwasser getrennt wird, welches Restwasser der festen Phase aus der ersten mechanischen Trennung zugeführt wird und die entstandene Aufschlämmung gegebenenfalls weiterbehandelt wird.

In einer besonderen Ausführungsform des Verfahrens zur Aufbereitung von Klärschlamm ist die Mineralsäure Salpetersäure und die aus Restwasser und fester Phase erhaltene Aufschlämmung wird mit Zusatzstoffen, wie Dolomit, Calciumcarbonat, Phosphorpentoxid und/oder Kaliumsulfat, und mit geeigneten Mikroorganismen versetzt und das erhaltene Gemisch wird einer aeroben mikrobiologischen Behandlung unterworfen und anschießend gegebenenfalls bei niedrigen Temperaturen mit Luft oder Gas getrocknet, um ein organisch- mineralisches Düngemittel zu erhalten.

In einer weiteren Ausführungsform des Verfahrens zur Aufbereitung von Flugasche ist die Mineralsäure Schwefelsäure und die aus Restwasser und fester Phase erhaltene Aufschlämmung wird mit Zusatzstoffen, wie Kalk, versetzt und gegebenenfalls getrocknet und vermahlen, um ein hydraulisches Bindemittel zu erhalten. Bei der Flugasche handelt es sich vorzugsweise um eine Flugasche, welche bereits Puzzolane enthält.

Grundsätzlich können die Parameter Fesstoffgehalt des Eingangsmaterials, pH-Wert, verwendete Säure zur Ansäuerung, Fällungsmittel sowie die Zusätze zur festen Phase entsprechend den Anforderungen an das Endprodukt und das Deponieprodukt gewählt werden.

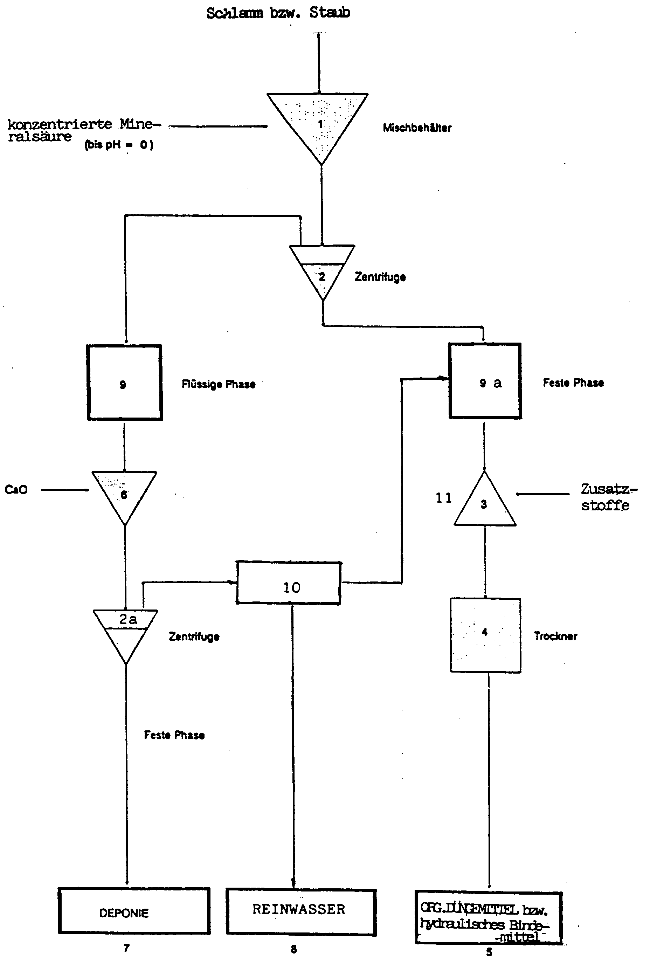

Die Grundzüge des Verfahrens sind im Fließschema (Fig. 1) dargestellt, wobei das Verfahren in keiner Weise auf dieses Fließschema beschränkt ist.

Zur Erläuterung des Verfahrens wird eine Verfahrensbeschreibung auf Grund der Ergebnisse eines halbtechnischen Versuches mit einem speziellen Klärschlamm, dessen Eingangsanalyse in Tab. 1 angegeben ist, durchgeführt.

Der Klärschlamm wird mit 6 % Feststoff und einem pH-Wert von 7,4 in einen Mischbehälter (1) aufgegeben. Dort wird 75 l 65%ige Salpetersäure/m³ Klärschlamm eingemischt. Dabei wird der pH-Wert gegen Null absinken. Die enthaltenen Schwermetalle werden in Ionenform in die flüssige Phase übergehen. Danach wird das Gemenge mechanisch (2) in eine flüssige Phase (9) mit einem Feststoffgehalt von ca. 2 % und eine feste Phase (9 a) mit einem Wassergehalt von ca. 60 % aufgetrennt.

Die flüssige Phase (9) wird dann mit Kalk bzw. Kalziumoxid versetzt, sodaß der pH-Wert wieder auf über 7 ansteigt. Dabei fallen die Schwermetallionen aus. Wenn beabsichtigt ist, die Schwermetalle wieder rückzugewinnen, sollte Sorge getragen werden, nicht zuviel Überschuß-Kalk einzusetzen. Danach wird der Feststoff, der ausgefallen ist, über eine mechanische Trennvorrichtung (2 a) abgetrennt und entweder deponiert oder für die Schwermetallrückgewinnung getrocknet.

Die flüssige Phase mit den verbliebenen organischen Bestandteilen und Kalziumnitrat wird nun über eine Osmose-Zelle (10) in Reinwasser (8) und ein aufkonzentriertes Restprodukt (11) aufgeteilt. Das Reinwasser kann entweder verwendet oder in jeden Vorfluter entlassen werden. Das aufkonzentrierte Restprodukt wird der festen Phase (9 a) zugeführt. Dieser festen Phase werden dann nährstoffreiche Zuschlagsstoffe beigefügt, sodaß ein organisch-mineralisches Düngemittel mit einer bestimmten Zusammensetzung entsteht, gleichzeitig wird auf einen gewünschten pH-Wert eingestellt.

Durch die Absenkung des pH-Wertes auf Null in der Anfangsphase werden in den organischen Schlammbestandteilen (Zellulosefasern, Lignin, Hemizellulose) die Hemizellulosen aus den Fasern herausgelöst und verzuckert. Der verbleibende organische Anteil erhält eine große Oberfläche und lagert Mineralstoffe und Spurenelemente ein. Zum Teil werden auch metallorganische Verbindungen entstehen.

Die Absenkung des pH-Wertes hat auch zur Folge, daß sämtliche pathogenen Keime abgetötet werden.

Das Endprodukt wird nun mit etwas Rückgut vermengt und nach Einstellung eines adäquaten C:N-Verhältnisses und einer für Mikroorganismen günstigen Elektrolyt-Konzentration einer kurzen aeroben, mikrobiologischen Behandlung unterzogen. Hier werden die Zucker sowie andere organische Begleit- und Stinkstoffe oxydiert. Dabei entsteht Wärme. Diese beschleunigt den Trocknungsprozeß. Nach Abschluß dieses Prozesses und nach Abkühlung hat das Endprodukt eine bestimmte Population von Bodenbakterien. Dabüberhinaus wird jeder unangenehme Geruch abgebaut. Dann wird das Material getrocknet (im gleichen Prozeß) und ist ein organisch-mineralisches Düngemittel mit einer physiologisch günstigen Zusammensetzung.

Wenn das obige Gemenge ohne die kurze mikrobiologische Behandlung als Düngemittel eingesetzt wird, sind zwar organische Bestandteile als Füll- und Trägerstoffe enthalten, es hat aber keine mikrobielle Aktivität (CO₂-Ausscheidung).

Kalziumnitrat ist stark hygroskopisch. Die organischen Bestandteile im Dünger, im wesentlichen kohlenstoffhältige Fasern und Lignin, bilden im getrockneten Zustand eine sehr große Oberfläche und binden das Kalzium adsorptiv an sich. Dadurch wird die Hygroskopie sehr stark reduziert. Des weiteren wird die Auswaschbarkeit des Kalziums bei starkem Regen im Boden gebremst.

Die Zusammensetzung eines durch das erfindungsgemäße Verfahren erhaltenen organisch-mineralischen Düngemittels ist in Tabelle 1 angeführt:

**TABELLE 1**

| | | Ausgangs material | Düngemittel |
|---|---|---|---|
| N | % | 3,6 | 8 |
| P₂O₅ | % | 6,9 | 5 |
| K₂O | % | 0,7 | 20 |
| MgO | % | 1,7 | 5,3 |
| Fe | mg/kg | 7.420 | 9.100 |
| Mn | mg/kg | 229 | 141 |
| Cu | mg/kg | 355 | 76 |
| Zn | mg/kg | 1.914 | 52,10 |
| Co | mg/kg | 11,58 | 4,78 |
| Mo | mg/kg | 14,31 | 2,65 |
| B | mg/kg | 51,20 | 5,50 |
| As | mg/kg | 6,30 | 6,88 |
| Ni | mg/kg | 104,72 | 17,41 |
| Cr | mg/kg | 842,00 | 21,1 |
| Pb | mg/kg | 155,16 | 6,03 |
| Cd | mg/kg | 3,85 | 0,78 |

Sämtliche Problem-Schwermetalle wurden durch des erfindungsgemäße Verfahren so stark reduziert, daß sie in der üblichen Größenordnung der Schwermetalle im Boden vorhanden sind.

Wird das erfindungsgemäße Verfahren zur Entfernung von Schwermetallen aus Industrieschlämmen und Filterstäuben angewandt, um die Schlämme und Stäube problemlos deponierbar oder für eine weitere Verwendung nutzbar zu machen, werden andere Parameter eine optimale Lösung ergeben. Wenn beispielsweise ein sehr hoher Zinkanteil in den Schlämmen und Stäuben vorherrscht, wird als Säure Schwefelsäure eingesetzt werden und als Fällungsmittel Kalk. Dann wird der Feststoff mit den ausgefällten Schwermetallen Gips als Begleitprodukt enthalten. Beim Erschmelzungsprozeß wird der Gips nun in Kalk und Schwefelsäure zerlegt werden, die Schwefelsaure wird rückgewonnen und kann wiederum eingesetzt werden.

In der festen Phase ist der Schwermetallgehalt soweit reduziert, daß sie problemlos deponiert werden kann.

Weiters kann durch Einstellung eines bestimmten Temperaturverlaufes in der flüssigen Phase sowie einer gewissen Verweilzeit die Form des entstehenden Gipses beeinflußt werden (Alpha-Gips, Beta-Gips, etc.), was bei Puzzolan hältigen Stäuben von besonderem Vorteil ist. Nachdem der Feststoffanteil mit den Schwermetallen abgetrennt wurde, kann nun die flüssige Phase mit dem enthaltenen Gips beispielsweise durch Osmose aufkonzentriert und der festen Phase zugegeben werden. Dabei entsteht eine gewisse Zusammensetzung von Puzolanen und Gipsen, die den Einsatz der festen Phase für spezifische Zwecke in der Bauindustrie ermöglicht.

Im folgenden werden Beispiele für die Zusammensetzung einiger anwendbarer Puzzolan-Gipsbildnermischungen angegeben:

| Mischung | A Masse-% | B Masse-% | C Masse-% |
|---|---|---|---|
| Flugasche* | 27 | 10:20 | 20:25 |
| Gesamt-CaO | 36 | 36 | 25-30 |
| freies CaO | 3 | 3 | 3 |
| Gesamt-S | 14 | 31:21 | 32:22 |
| H₄SiO₄ | 10 | 10 | 10 |
| Al₂O₃ | 6 | 6 | 6 |
| Fe₂O₃ | 3 | 3 | 3 |

| | | | |
|---|---|---|---|
| * Flugasche mit einem SiO₂-Gehalt von 45-46 Masse-%. | | | |

Mischung A ist ein industrielles REA-Produkt mit einem Raumgewicht von etwa 2.200 g/l, einem Schüttgewicht von etwa 900 bis 1.100 g/l und einem Größtkorn von 0,1 mm, wobei 6-7 Masse-% des REA-Produktes eine Korngröße von 0,09 mm aufweisen und von den 14 Masse-% Gesemtschwefel 12 auf Sulfitschwefel und 2 auf Sulfatschwefel fallen.

Mit einer Füllmasse aus REA-Produkt A mit der doppelten Menge Anmachwasser wurde eine Bodendichtheit einer Dauer von etwa 14 Tagen, mit der gleichen Menge Anmachwasser eine solche einer Dauer von etwa 1 Monat und mit einem Wasser/REA-Produkt-Verhältnis von 0,7 eine solche von etwa 5 Monaten erzielt.

Durch das erfindungsgemäße Verfahren zur Behandlung der Stäube bzw. Schlämme kann nun des Schadstoffpotential soweit abgesenkt werden, daß keine Beeinträchtigung des Grundwassers eintritt.

Die Wirtschaftlichkeit des erfindungsgemäßen Verfahrens hängt weitgehend von 2 Faktoren ab. Der eine Faktor sind die Kosten, die auf der Deponie für die Deponierung des jeweiligen Schlammes verlangt werden, zuzüglich der Transportkosten. Der zweite Faktor ist der erzielbare Verkaufspreis für des gewonnene Produkt, beispielsweise ein organisch-mineralisches Düngemittel, ein Erzkonzentrat und/oder ein hydraulisches Bindemittel.

Aus ökologischer Sicht allerdings ist jede Deponierung von nicht-stabilisiertem oder aufbereitetem Schlamm bzw. Staub eine Zukunftsbombe, die unter Umständen in einigen Jahren mit erheblichem Aufwand entschärft werden muß.

Der Energiebedarf des Verfahrens ist im wesentlichen elektrischer Strom für die Pumpe bei der Osmose, wobei moderne Osmose-Anlagen hier schon sehr niedere Werte erreichen. Durch die Verfahrensführung wird die Osmose-Zelle nur sehr geringfügig beansprucht.

Für die Trocknungsenergie kann Abwärme aus verschiedenen Industrieprozessen, aber auch Deponiegas aus bestehenden Deponien verwendet werden.

## Patentansprüche

1. Verfahren zur Aufbereitung von Abfallstoffen, wie Schlämmen und Stäben, welche Schwermetalle, pathogene Keime und/oder weitere Schadstoffe sowie organische Bestandteile enthalten, dadurch gekennzeichnet, daß die Abfallstoffe mit einer konzentrierten Mineralsäure bis zum Erreichen eines pH-Wertes von Null versetzt und anschließend mechanisch in eine feste und eine flüssige Phase getrennt werden, die flüssige Phase durch Zugabe von Kalk auf einen pH-Wert von etwa 7 eingestellt wird und die dabei ausfallenden Feststoffe mechanisch abgetrennt und wahlweise einer Deponierung oder einer weiteren Aufarbeitung zugeführt werden, die verbleibende flüssige Phase osmotisch in Reinwasser und in verschiedene Inhaltsstoffe enthaltendes Restwasser getrennt wird, welches Restwasser der festen Phase aus der ersten mechanischen Trennung zugeführt wird und die entstandene Aufschlämmung gegebenenfalls weiterbehandelt wird.

2. Verfahren nach Anspruch 1, dadurch gekennzeichnet, daß die Mineralsäure Salpetersäure ist und die aus Restwasser und fester Phase erhaltene Aufschlämmung mit Zusatzstoffen, wie Dolomit, Calciumcarbonat ,Phosphorpentoxid und/oder Kaliumsulfat, und mit geeigneten Mikroorganismen versetzt wird und des erhaltene Gemisch einer aeroben mikrobiologischen Behandlung unterworfen und anschließend gegebenenfalls bei niedrigen Temperaturen mit Luft oder Gas getrocknet wird, um ein organisch-mineralisches Düngemittel zu erhalten.

3. Verfahren nach Anspruch 2, dadurch gekennzeichnet, daß die geeigneten Mikroorganismen durch Zugabe von biologisch aktivem Ausgangsmaterial oder Endprodukt zugefügt werden.

4. Verwendung des nach dem Verfahren aus Anspruch 2 oder 3 erhaltenen Hauptproduktes als organisch-mineralisches Düngemittel.

5. Verfahren nach Anspruch 1, dadurch gekennzeichnet, daß die Mineralsäure Schwefelsäure ist und die aus Restwasser und fester Phase erhaltene Aufschlämmung mit Zusatzstoffen, wie Kalk, versetzt und gegebenenfalls getrocknet und vermahlen wird, um ein hydraulisches Bindemittel zu erhalten,

6. Verwendung des nach dem Verfahren aus Anspruch 5 erhaltenen Hauptproducktes als hydraulisches Bindemittel.
